(19) Europäisches Patentamt
European Patent Office
Office européen des brevets

(11) **EP 4 574 286 A1**

(12) **EUROPEAN PATENT APPLICATION**

(43) Date of publication:
**25.06.2025 Bulletin 2025/26**

(21) Application number: **23307345.1**

(22) Date of filing: **22.12.2023**

(51) International Patent Classification (IPC):
**B09C 1/08** (2006.01)    **C04B 14/30** (2006.01)
**B09B 3/27** (2022.01)    **C09K 17/10** (2006.01)
**C04B 28/04** (2006.01)    **C04B 22/12** (2006.01)
**C04B 24/04** (2006.01)    **C04B 18/04** (2006.01)
**B09B 101/90** (2022.01)    **C04B 103/00** (2006.01)
**C04B 111/00** (2006.01)

(52) Cooperative Patent Classification (CPC):
(C-Sets available)
**B09C 1/08; B09B 3/27; C04B 14/308; C04B 28/04; C09K 17/10;** B09B 2101/90; B09C 2101/00;
C04B 2103/0014; C04B 2111/00732;
C04B 2111/00767                    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: Holcim Technology Ltd
**6300 Zug (CH)**

(72) Inventors:
• **DUMAS, Amandine**
  **38070 SAINT QUENTIN FALLAVIER (FR)**
• **TAPSOBA, Nouffou**
  **38070 SAINT QUENTIN FALLAVIER (FR)**
• **SERCLERAT, Ivan**
  **38070 SAINT QUENTIN FALLAVIER (FR)**

(74) Representative: **Regimbeau**
  **20, rue de Chazelles**
  **75847 Paris Cedex 17 (FR)**

(54) **METHOD TO TREAT SOILS POLLUTED BY METALLIC OR METALLOID OXYANIONS**

(57)    The invention relates to a method for treating soil polluted by metallic and/or metalloid oxyanions comprising at least a step (i) of mixing said soil with, by weight of dry soil:
- from 2% to 10%, preferably from 3% to 5%, of an iron salt selected in the group consisting of ferrous oxalate, ferrous chloride, ferric chloride and their mixtures thereof,
- from 2% to 10%, preferably from 3% to 5% of a hydraulic binder comprising from 5% to less than 95% in weight of Portland clinker.

(52) Cooperative Patent Classification (CPC): (Cont.)

C-Sets
**C04B 28/04, C04B 14/28, C04B 14/106,
C04B 18/0472, C04B 22/12, C04B 24/04,
C04B 40/0028**

## Description

### FIELD OF THE INVENTION

The present invention concerns a method to treat soils polluted by metallic or metalloid oxyanions.

### BACKGROUND OF THE INVENTION

Soil remediation is a growing need, with high stakes for public health and environmental protection.

In particular, during construction work, builders are required to treat excavated soil before disposing of it.

The release of soluble pollutants upon contact with water poses a major potential pollution risk to the environment when contaminated soils are stored for short or long periods, or reused.

To limit this risk, before contaminated soil can be landfilled, its hazard class must be lowered, which means lowering the level of leachable pollutants in the water.

Lowering the hazard class can also enable the soil treated in this way to be reused, for example in road sub-bases or backfill.

Among the elements to be treated are metals and metalloids present in the soil. These metals may be present in the form of oxyanions which are found in various excavated soils.

The use of iron oxides or iron hydroxides is known for oxyanions remediation in polluted soils. The main mechanism for oxyanions remediation is sorption of oxyanions on iron oxides or iron (hydr-)oxides particles. However, the effectiveness of such treatments remains limited with low oxyanion entrapment.

Iron chlorides and iron sulfates can also be used to decrease the mobility of the metal or metalloid oxyanions but, due to the high water solubility of these iron salts, leaching of chloride ions or sulfate ions can occur over time thus leading to an adverse environmental impact and exceeding regulatory threshold values.

Another disadvantage of treating soils with iron salts is that the mechanical properties of the soil treated with iron salts are not improved so that soil valorization is limited.

Cementitious materials can also be used to treat soils contaminated by metallic or metalloid oxyanions. However, their use is limited by the high solubility of metallic or metalloid oxyanions at alkaline pH. In addition, their efficacy is limited to soils with high content of pollutant. The main retention mechanism in these cases is the precipitation of insoluble minerals phase (powellite $CaMoO_4$ for example). This mechanism is limited by the condition of saturation in the solution of the treated pollutant. These saturating conditions impose a certain concentration, much higher than the environmental threshold values to respect. The efficacy of cementitious materials also depends on the type of oxyanion and of its RedOx state. Another disadvantage of cementitious materials is that they are not efficient at low concentrations.

There is thus still a need to develop methods to treat soil contaminated by metallic or metalloid oxyanions which are efficient to decrease the mobility of these contaminants in order to prevent their leaching over time, are safe for the environment and allows improving the mechanical properties of the treated soil in order to valorize it.

### SUMMARY OF THE INVENTION

The invention is directed to a method for treating soil polluted by metallic and/or metalloid oxyanions comprising at least a step (i) of mixing said soil with, by weight of dry soil:

- from 2% to 10%, preferably from 3% to 5%, of an iron salt selected in the group consisting of ferrous oxalate, ferrous chloride, ferric chloride and their mixtures thereof,
- from 2% to 10%, preferably from 3% to 5% of a hydraulic binder comprising from 5% to less than 95% in weight of Portland clinker.

Advantageously, the hydraulic binder is a CEM II, CEM III, CEM IV or CEM V type cement as described in NF EN 197-1 of April 2012 or a CEM II/C-M or CEM VI as defined in EN 197-5 of May 2021.

Advantageously, metallic and/or metalloid oxyanions are selected in the group consisting of antimony (Sb), arsenic (As), chromium (Cr), molybdenum (Mo), selenium (Se), Vanadium (V) or Tungsten (W) oxyanions and their mixtures.

Advantageously, for step (i), the iron salt and the hydraulic binder are added simultaneously to the soil.

Advantageously, for step (i), the iron salt and the hydraulic binder are added separately to the soil.

The invention is directed to a product obtained from the method described above, comprising a soil, a hardened hydraulic binder and iron (hydr-)oxides.

The invention is also directed to a composition for the treatment of soil polluted by metallic and/or metalloid oxyanions comprising in % by weight:

- from 17% to 83% of an iron salt selected in the group consisting of ferrous oxalate, ferrous chloride, ferric chloride and their mixtures thereof;
- from 17% to 83% of a hydraulic binder comprising from 20% to less than 95% in weight of Portland clinker.

Advantageously, the hydraulic binder is a CEM II, CEM III, CEM IV or CEM V type cement as described in NF EN 197-1 of April 2012 or a CEM II/C-M or CEM VI as defined in EN 197-5 of May 2021.

The invention is also directed to the use of the composition as described above to treat soil polluted by metallic and/or metalloid oxyanions.

The invention is alo directed to the use of the method as described above for the stabilization on site or before storing of soil polluted by metallic and/or metalloid oxyanions.

Other aspects of the invention are as described below.

**DEFINITIONS**

Metallic or metalloid oxyanion: anion containing one or more oxygen atoms and/or one or more metallic or metalloid atoms.

Advantageously, the metal or the metalloid is a metal or a metalloid recognized as toxic with an average content in the soils below 1 g/kg. Such metals and metalloids are generally referred to as 'metallic trace elements' even if they encompass both metal and metalloid elements. In some cases, they are also referred to as 'heavy metals'.

Typically, the metal or the metalloid can be antimony (Sb), arsenic (As), barium (Ba), cadmium (Cd), chromium (Cr), copper (Cu), mercury (Hg), lead (Pb), molybdenum (Mo), nickel (Ni), selenium (Se), zinc (Zn), Vanadium (V) or Tungsten (W).

In the present invention, the term "soil" means a more or less friable material predominantly made up of earth and/or sand in all possible proportions.

**DETAILED DESCRIPTION**

It was discovered that a method for treating soil polluted by metallic and/or metalloid oxyanions comprising at least a step (i) of mixing said soil with, by weight of dry soil, from 2% to 10%, preferably from 3% to 5%, of an iron salt selected in the group consisting of ferrous oxalate, ferrous chloride, ferric chloride and their mixtures thereof, and from 2% to 10%, preferably from 3% to 5% of a hydraulic binder comprising from 5% to less than 95% in weight of Portland clinker, allows efficient oxyanion remediation.

In particular:

- the metallic and/or metalloid oxyanions have decreased mobility after treatment leading to limited leaching, typically below regulation threshold values ;
- the method allows more efficient oxyanion removal in comparison with methods using cementitious materials alone or using the combination of cementitious materials with other iron salts, especially at a low content of the iron salt and cementitious material.

In addition, the mechanical properties of the soil are improved so that treated soil can be valorized, as a subroad layer for example.

The method is simple and economical with a limited number of components used to treat the soil and a limited number of steps.

The method is also versatile: the nature of the cementitious materials and their quantities can be adjusted depending on the mechanical constraints to which the treated soil will be subj ected.

Method

A first aspect of the invention is thus a method for treating soil polluted by metallic and/or metalloid oxyanions comprising at least a step (i) of mixing said soil with, by weight of dry soil:

- from 2% to 10%, preferably from 3% to 5%, of an iron salt selected in the group consisting of ferrous oxalate, ferrous chloride, ferric chloride and their mixtures thereof,
- from 2% to 10%, preferably from 3% to 5% of a hydraulic binder comprising from 5% to less than 95% in weight of Portland clinker.

The soil to be treated is a soil polluted by metallic and/or metalloid oxyanions as described above.

Advantageously, the metallic and/or metalloid oxyanions are selected in the group consisting of antimony (Sb), arsenic (As) chromium (Cr), molybdenum (Mo), selenium (Se), Vanadium (V) or Tungsten (W) oxyanions and their mixtures.

The soil to be treated can contain one or several of the oxyanions listed above.

In particular, the soil can contain molybdenum (Mo) oxyanion as metallic oxyanion.

IRON SALT

Iron salts are expected to precipitate to form iron (hydr-)oxides.

One of the mechanism for oxyanions remediation according to the invention is believed to be sorption of oxyanions on the particles of iron (hydro-)oxide particles.

All iron salts are not efficient for oxyanion remediation according to the invention.

Iron nitrates such as ferric nitrates ($Fe(NO_3)_3$) have a low efficiency contrary to ferrous oxalate, ferrous chloride or ferric chloride.

The iron salt is thus selected in the group consisting of ferrous oxalate, ferrous chloride, ferric chloride and their mixtures thereof.

In some cases, if the metal or the metalloid element of the oxyanion is sensitive to oxydo-reduction conditions (like Sb, Se or Cr for example), using ferrous oxalate ($FeC_2O_4$) or ferrous Chloride ($FeCl_2$) can help to reduce it in a less toxic or a more favorable to sorption form. For instance, Cr III is less soluble than Cr VI.

The iron salts can be anhydrous or hydrated. When hydrates are used, the quantities indicated in the present application correspond to the quantities of the corresponding anhydrous salt.

The iron salt is present in a quantity from 2% to 10%, preferably from 3% to 5%, by weight of dry soil. The iron salt can be present in a quantity from 2% to 8%, from to 2% to 6%, from 3% to 8% or from 3% to 6%.

Oxyanionic forms of metals and metalloids are more soluble at neutral to alkaline pH than at acidic pH. For remediation efficiency, it is advantageous that the metallic and/or metalloid oxyanions are in a solubilized form.

Advantageously, the pH of the polluted soil is from 3 to 11, preferably from 5 to 9.

In addition, if the pH of the polluted soil is too acidic, typically around and below 2, dissolution of iron (hydr-)oxides may occur, thus releasing the sorbed oxyanions.

HYDRAULIC BINDER

In the sense of the present invention, a hydraulic binder is a binder that is formed and hardened by chemical reaction with water. The oxide formulas commonly encountered in the field of hydraulic binders are generally abbreviated with a single letter, as follows: C represents CaO, A represents $Al_2O_3$, F represents $Fe_2O_3$, S represents $SiO_2$, \$ represents $SO_3$, M represents MgO, and T represents $TiO_2$.

The treatment method advantageously allows chemically and/or physically trapping the metallic or metalloid oxyanion within a solid material especially comprising the soil and a hardened hydraulic binder.

During the soil treatment, the hydraulic binder absorbs the water and then hardens, thus forming a matrix in which the iron (hydr-)oxides - on which the oxyanions are sorbed - are believed to be encased. Thus, the use of a hydraulic binder makes it possible to encapsulate the iron (hydr-)oxides particles and totally or partially prevent release of the metallic or metalloid oxyanion when the treated soil is stored.

Retention by precipitation of insoluble mineral phases containing the oxyanion may also be possible.

In addition, this hardening makes it possible to consolidate the treated soil. Thus, the treated soil can be easily handled and transported (especially by land transport).

The hydraulic binder comprises from 5% in weight to less than 95% in weight of Portland clinker. Advantageously, the hydraulic binder comprises less than 90% in weight of Portland clinker, preferably less than 80% in weight of Portland clinker, more preferably less than 70% in weight of Portland clinker.

Advantageously, the hydraulic binder comprises at least 5% in weight of a mineral addition. Advantageously, the hydraulic binder comprises at least 10% in weight of a mineral addition, preferably at least 20% in weight of a mineral addition, more preferably at least 30% in weight of a mineral addition.

The mineral addition can be slag (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), limestone components (for example, as defined in the "Concrete" NF P 18-508 Standard), silica fume (for example, as defined in the European NF EN 197-1 Standard of April 2012, paragraph 5.2.7), siliceous components (for example, as defined in the "Concrete" NF P 18-509 Standard), calcined clay or mixtures thereof.

The mineral addition is preferably selected from calcined clay, limestone, slag and mixtures thereof. Calcined clay may be metakaolin.

Advantageously, the hydraulic binder is a CEM II, CEM III, CEM IV or CEM V type cement as described in NF EN 197-1 of April 2012 or a CEM II/ C-M or CEM VI as defined in EN 197-5 of May 2021. Advantageously the binder is Calcined Clay Cement.

Calcined Clay Cement comprises Portland clinker, calcined clay, limestone and optionally gypsum. In particular, Calcined Clay Cement comprises in weight, compared to the total weight of the cement:

- from 5% to 70% of Portland clinker, preferably from 20% to 65% of Portland clinker;
- from 20% to 70% of calcined clay;
- from 5% to 40% of limestone;
- up to 10% of gypsum;
- the total weight content of calcined clay + limestone being more than 30%.

Advantageously, the hydraulic binder is a CEM III, CEM IV or CEM V type cement as described in NF EN 197-1 of April 2012 or a Calcined Clay Cement.

Advantageously, the hydraulic binder is a CEM III A, B or C, type cement, i.e. a so-called cement obtained by mixing a Portland clinker with 30 to 90% by weight, preferably 36 to 95% by weight of blast furnace slag, or a Calcined Clay Cement.

The hydraulic binder is present in a quantity from 2% to 10%, preferably from 3% to 5%, by weight of dry salt. The hydraulic binder can be present in a quantity from 2% to 8%, from to 2% to 6%, from 3% to 8% or from 3% to 6%.

Advantageously, the soil is treated with, by weight of dry soil:

- from 2% to 8% of an iron salt selected in the group consisting of ferrous oxalate, ferrous chloride, ferric chloride and their mixtures thereof,
- from 2% to 8% of a hydraulic binder comprising less than 95% in weight of Portland clinker.

Advantageously, the soil is treated with, by weight of dry soil:

- from 2% to 6% of an iron salt selected in the group consisting of ferrous oxalate, ferrous chloride, ferric chloride and their mixtures thereof,
- from 2% to 6% of a hydraulic binder comprising less than 95% in weight of Portland clinker.

Advantageously, the soil is treated with, by weight of dry soil:

- from 3% to 8% of an iron salt selected in the group consisting of ferrous oxalate, ferrous chloride, ferric chloride and their mixtures thereof,
- from 3% to 8% of a hydraulic binder comprising less than 95% in weight of Portland clinker.

Advantageously, the soil is treated with, by weight of dry soil:

- from 3% to 6% of an iron salt selected in the group consisting of ferrous oxalate, ferrous chloride, ferric chloride and their mixtures thereof,
- from 3% to 6% of a hydraulic binder comprising less than 95% in weight of Portland clinker.

MIXING STEP (i)

In some embodiments, the hydraulic binder and the iron salt are added simultaneously to the soil, optionally in the form of a composition such as defined in the third aspect of the invention. Advantageously, the treatment method according to the invention comprises at least the following successive steps:

a) provide the soil;
b) add the hydraulic binder and iron salt to the soil together, optionally in the form of a composition such as defined in the third aspect of the invention;
c) work the product of step b) - corresponding to mixing step (i);
d) optionally, a hardening step.

In other embodiments, the hydraulic binder and iron salt are added to the soil separately, a working step being optionally interspersed between the two addition steps. The treatment method according to the invention can comprises at least the following successive steps:

a) provide the soil;
b) separately add the hydraulic binder and the iron salt to the soil. A working step can optionally be interspersed between these two additions;
c) work the product of step b) - corresponding to mixing step (i);
d) optionally, a hardening step.

Advantageously, the soil is treated by using only hydraulic binder and iron salt, and optionally water.

In other words, the implementation of the method advantageously does not require the use of any other component, in particular of other curing products, whether solid or liquid, organic or mineral.

Advantageously, the implementation of the method does not require the use of other calcium-based compounds such as calcium oxide, calcium sulfate or hydrated lime. Advantageously, the implementation of the method does not require the use of other components such as aluminum silicates.

Advantageously, the method does not comprise any step of adjusting the pH of the soil, in particular the addition of an alkaline component.

In some embodiments of the invention, water is added to the soil before or after the addition of the hydraulic binder and iron salt, the water being present to a content from 3% to 50% relatively to the weight of the dry soil.

For example, the water content of the soil can be adjusted so that the soil entering into the working step contains from 3 to 50%, preferably from 3 to 40%, preferably from 3 to 35%, preferably from 3 to 20%, more preferably from 3 to 15% by weight of water.

Water has to be present in an amount sufficient to solubilize the iron salt and hydrate the hydraulic binder.

The required amount of water depends on the type of soil. Typically, a higher amount of water will be necessary for a clayed soil compared to a sandy soil.

The addition of water can also be performed during the mixing/working step.

Water and iron salt can be added separately to the soil before mixing step (j) or added continuously during mixing step (i).

In some embodiments, iron salt can be dissolved in water prior to mixing step (i).

The implementation of the working / mixing step and hardening steps are detailed below.

For the purposes of the present invention, mixing step (i) consists of working the polluted soil, the hydraulic binder and the iron salt until obtaining a homogenous mixture.

Any type of mixer can be used, in particular an industrial mixer, in particular a mixer operating continuously or discontinuously. The mixer can be open or closed.

Mixing can for example be carried out using a fixed or mobile concrete mixer (e.g. concrete mixer) (e.g. mixer truck).

The mixing step can last between 1 minute and 2 hours, for example between 1 minute and 30 minutes, or between 30 and 2 hours, depending on the volume of mixture to be mixed.

A rest time can optionally be observed after a working step.

The method of the invention preferably comprises a step of hardening the worked mixture of hydraulic binder, iron salt and soil.

Advantageously, after mixing step (i), the mixture of polluted soil and ferrous oxalate is left to cure, at a temperature between 0°C and 50°C, for a duration ranging from one hour to 2 months.

The duration for curing can range from 2 hours to 56 days, from 6 hours to 30 days, from 6 hours to 10 days, or from 24 hours to 96 hours.

Advantageously, the hardening process can occur either on-site during the working phase or following the transportation of the processed mixture to a storage location.

Product obtained by the method

According to a second aspect, the invention concerns a product that can be obtained at the end of the method of the invention, characterized in that it comprises a soil, a hardened hydraulic binder and iron (hydr-)oxides such as defined above.

Soil treatment composition

According to a third aspect, the invention concerns a composition for the treatment of soil polluted by metallic and/or metalloid oxyanions comprising in % by weight:

- from 17% to 83% of an iron salt selected in the group consisting of ferrous oxalate, ferrous chloride, ferric chloride and their mixtures thereof;
- from 17% to 83% of a hydraulic binder comprising less than 95% in weight of Portland clinker.

The composition advantageously comprises between 37,5% and 62,5% by weight of hydraulic binder and between 37,5% and 62,5% of iron salt.

The composition can comprise between 20% and 80% by weight of hydraulic binder and between 20% and 80% of iron salt.

The composition can comprise between 25% and 75% by weight of hydraulic binder and between 25% and 75% of iron salt.

The composition can comprise between 27% and 73% by weight of hydraulic binder and between 27% and 73% of iron salt.

The composition can comprise between 33% and 67% by weight of hydraulic binder and between 33% and 67% of iron salt.

The percentages are expressed in % by weight of hydraulic binder and iron salt.

Advantageously, the composition consists of the hydraulic binder and the iron salt.

The hydraulic binder and the iron salt are as described above.

Use of ferrous oxalate

A fourth aspect of the invention concerns the use of the composition as defined in the third aspect of the invention to treat soil polluted by metallic and/or metalloid oxyanions.

Use of the method

A fifth aspect of the invention concerns the use of the method as described in the first aspect of the invention for the stabilization on site or before storing of soil polluted by metallic and/or metalloid oxyanions.

Unless otherwise indicated, the ratios indicated in this application are mass ratios and the percentages are mass percentages.

Unless otherwise stated, these mass ratios and mass percentages correspond to ratios and percentages relative to the weight of the dry soil to be treated.

The examples which follow are given for illustrative purposes but should in no way be considered as limiting the present invention.

## EXAMPLES

1. Analysis methods

- Water soil content:

The soil content in water and dry matter were determined according to the method described in standard NF EN 1097-5 (A) of November 1999. The expression "soil dry matter" is abbreviated "DM."

The soil content in water is expressed in weight % relative to the weight of the dry soil.

- Soil pH:

Soil pH can be measured according to standard ISO 10390: dilution of 1 volume of soil in 5 volume of water or potassium chloride solution or calcium chloride solution, agitation for 1h and resting time of one hour, measurement of the solution pH using a pH electrode.

- Leaching tests:

The tests were all conducted in accordance with the recommendations of standard NF EN-12457-2, December 2002.

The tests are carried out on a material in which at least 95% of the particles (by mass) have a size of less than 4 mm.

For analyses and leaching tests, the dry matter (DM) mass of the sample is determined after heating in a 105°C $\pm$ 5°C oven to constant weight in accordance NF EN 1097-5 (A) of November 1999.

From the test specimen, a test sample with a total wet mass containing exactly 0.090_kg ± 0.005_kg (measured with an accuracy of 0.1_g) of dry matter is prepared.

The leaching test is carried out at room temperature, i.e. 20°C ± 2°C.

The wet test sample with a total mass corresponding to 0.090_kg ± 0.005_kg of dry matter is placed in a bottle and a quantity of leachant (distilled water, demineralized water, deionized water or water of equivalent purity having a pH comprised between 5 and 7.5, conductivity less than 0.5 mS/m) is added to obtain a liquid-solid ratio of 10 L/kg ± 2%. The capped bottle is placed in an agitation device (as defined in the standard) and agitated at roughly 10 rpm for 24 hours ± 0.5 h. To achieve a good chemical equilibrium between the solid and the solution, it is important during extraction to avoid settlement of solids.

In addition to the samples, leaching "blanks" are also prepared.

After stopping the agitation, the suspended solids are allowed to settle for 15 minutes ± 5 min, then filtered under vacuum through a 0.45 $\mu$m membrane filter.

If filtration is made too difficult, the eluate may be centrifuged at 2000_g for 30 minutes to avoid clogging the 0.45 $\mu$m filter. The conditions are specified in standard NF EN-12457-2, December 2002.

The eluate is the solution retrieved at the end of the leaching test.

The eluate is then divided into an appropriate number of sub-samples for different chemical analyses and stored according to EN ISO 5667-3.

The analysis of the eluate produced by the leaching test provides the concentration of the constituents in the eluates, expressed in mg/L. The final results are expressed as the amount of constituent leached relative to the total mass of the sample, in mg/kg of dry matter.

The quantity of a constituent leached from the material, based on the dry mass of the original material, is calculated using the following formula:

$$A = C \times [(L / MD) + (MC / 100)] \ (1)$$

where:

A is the release of a constituent at a L/S = 10 (in milligrams per kilogram of dry matter);
C is the concentration of a particular constituent in the eluate (in milligrams per liter);
L is the volume of leachant used (in liters);
MC is the moisture content, expressed as a percentage of the dry mass (4.3.2) and calculated as follows: MC = 100 × (MW-MD)/MD
MD is the mass of the dried test sample expressed in kilograms.
MW is the mass of undried test sample expressed in kilograms.

The following analysis are performed on the eluate.

- Eluate pH:

Eluate pH is determined by measuring the pH using a pH electrode as described in the NF EN ISO 10523 standard of May 2012.

- Eluate oxyanion content

Oxyanion content is measured by ICP-MS following the EN-ISO 17294-2 standard of October 2016.

2. Materials

The soil to be treated is a limestone tunnel boring sludge contaminated with molybdenum (geogenic origin) named T1.

The cements used as hydraulic binders are:

- a CEM I 52.5N CE CP2 NF from Le Teil
- a CEM III/B 42.5N CE PM-ES from La Malle
- a calcined clay cement composed of 50% CEM I 52,5 R CE CP2 NF from Saint Pierre La Cour, 33% Calcined Clay from SOKA Kaolin and 17% Calcium Carbonate from Omya (BL 200 Orgon)

The iron salts are:

- ferrous oxalate dihydrate ($FeC_2O_4$, $2H_2O$), reagent grade supplied by the company Millipore Sigma. Cas Number: 6047-25-2 and Product Number: 307726
- ferrous chloride tetrahydrate ($FeCl_2,4H_2O$) reagent grade is supplied by the company Millipore Sigma Cas Number: 13478-10-9 and Product Number: 220299
- ferric chloride anhydrous ($FeCl_3$) reagent grade is supplied by the company Millipore Sigma Cas Number:7705-08-0 and Product Number: 157740
- ferric nitrate nonahydrate ($Fe(NO_3)_3$, $9H_2O$), reagent grade is supplied by the company Millipore Sigma. Cas Number: 7782-61-8 and Product Number: 216828

3. Experimental protocol:

Samples of contaminated soil are treated by the method according to the invention.

The water content of the soil to be treated, determined using the method described above, is from 20 to 24%.

Introduce 300-500 g of soil to be treated into a Planetary-type mixer.

Introduce the treatment composition (in powder form) in the proportions indicated in the example tables (% by weight relative to the weight of the dry soil to be treated).

Mix at low speed for 1 minute 30 seconds, then stop stirring.

Mix by hand, taking care to scrape down the sides of the bowl.

Mix at low speed for 30 seconds, then stop stirring.

Place the soil sample in a plastic bag sealed against air, water vapor and light.

Place the plastic bag containing the soil sample in a climatic chamber at 20°C±2°C.

Samples are cured for 7 days. Leaching tests and the eluate analyses described above are then performed.

4. Results

The table below provides the results of soil T1 containing Mo oxyanion treated with different iron salts and hydraulic binders.

% are given in weight by weight of dry soil.

The Mo concentration in the eluate is given in mg/kg of dry soil (dry matter - DM).

| Treatments | molybdenum (mg/kg DM) |
|---|---|
| Reference (no treatment) | 1,5 |
| 5% CEM I | 2,6 |
| 5% CEM III/B | 1,6 |
| 5% Calcined Clay Cement | 1,9 |
| 1% $FeC_2O_4$ + 3% CEM I | 1,8 |
| 1% $FeC_2O_4$ + 3% CEM III/B | 1,3 |
| 1% $FeC_2O_4$ + 3% Calcined Clay Cement | 1,3 |
| 1% $Fe(NO_3)_3$+ 3% CEM I | 1,1 |
| 1% $Fe(NO_3)_3$ + 3% CEM III/B | 1,4 |
| 1% $Fe(NO_3)_3$ + 3% Calcined Clay Cement | 1,4 |
| 3% $FeC_2O_4$ + 3% CEM I | 1,4 |
| 3% $FeC_2O_4$ + 3% CEM III/B | 0,18 |
| 3% $FeC_2O_4$ + 3% Calcined Clay Cement | 0,19 |
| 3% $Fe(NO_3)_3$+ 3% CEM I | 1,2 |
| 3% $Fe(NO_3)_3$ + 3% CEM III/B | 1,3 |
| 3% $Fe(NO_3)_3$ + 3% Calcined Clay Cement | 1 |
| 5% $FeC_2O_4$ + 3% CEM I | 0,9 |

(continued)

| Treatments | molybdenum (mg/kg DM) |
|---|---|
| 5% $FeC_2O_4$ + 3% CEM III/B | 0,07 |
| 5% $FeC_2O_4$ + 3% Calcined Clay Cement | 0,06 |
| 5% $Fe(NO_3)_3$+ 3% CEM I | 1,3 |
| 5% $Fe(NO_3)_3$ + 3% CEM III/B | 0,8 |
| 5% $Fe(NO_3)_3$ + 3% Calcined Clay Cement | 0,91 |
| 5% $FeC_2O_4$ + 5% CEM I | 1,3 |
| 5% $FeC_2O_4$ + 5% CEM III/B | 0,32 |
| 5% $FeC_2O_4$ + 5% Calcined Clay Cement | 0,55 |
| 5% $FeCl_3$ + 5% CEM III/B | 0,19 |
| 5% $FeCl_2$ + 5% CEM III/B | 0,22 |

Combinations including a hydraulic binder comprising 95% or more of Portland clinker (CEM-1) or including $Fe(NO_3)_3$ or with 1% of $FeC_2O_4$ are not effective to treat the polluted soil.

On the contrary, the combination of 3 or 5% of CEM III or Calcined Clay Cement with 3 to 5% of iron salts chosen among $FeC_2O_4$, $FeCl_2$ or $FeCl_3$ is effective for oxyanion remediation.

**Claims**

1. Method for treating soil polluted by metallic and/or metalloid oxyanions comprising at least a step (i) of mixing said soil with, by weight of dry soil:

   - from 2% to 10%, preferably from 3% to 5%, of an iron salt selected in the group consisting of ferrous oxalate, ferrous chloride, ferric chloride and their mixtures thereof,
   - from 2% to 10%, preferably from 3% to 5% of a hydraulic binder comprising from 5% to less than 95% in weight of Portland clinker.

2. Method according to claim 1, **characterized in that** the hydraulic binder is a CEM II, CEM III, CEM IV or CEM V type cement as described in NF EN 197-1 of April 2012 or a CEM II/C-M or CEM VI as defined in EN 197-5 of May 2021.

3. Method according to claim 1 or claim 2, **characterized in that** the metallic and/or metalloid oxyanions are selected in the group consisting of antimony (Sb), arsenic (As), chromium (Cr), molybdenum (Mo), selenium (Se), Vanadium (V) or Tungsten (W) oxyanions and their mixtures.

4. Method according to any one of the preceding claims, **characterized in that**, for step (i), the iron salt and the hydraulic binder are added simultaneously to the soil.

5. Method according to any one of claims 1 to 3, **characterized in that**, for step (i), the iron salt and the hydraulic binder are added separately to the soil.

6. A product obtained from the method according to any one of the preceding claims, comprising a soil, a hardened hydraulic binder and iron (hydr-)oxides.

7. A composition for the treatment of soil polluted by metallic and/or metalloid oxyanions comprising in % by weight:

   - from 17% to 83% of an iron salt selected in the group consisting of ferrous oxalate, ferrous chloride, ferric chloride and their mixtures thereof;
   - from 17% to 83% of a hydraulic binder comprising from 20% to less than 95% in weight of Portland clinker.

8. The composition according to claim 7, **characterized in that** the hydraulic binder is a CEM II, CEM III, CEM IV or CEM V type cement as described in NF EN 197-1 of April 2012 or a CEM II/C-M or CEM VI as defined in EN 197-5 of May 2021.

9. Use of the composition according to claims 7 or 8 to treat soil polluted by metallic and/or metalloid oxyanions.

10. Use of the method according to any one of claims 1 to 5 for the stabilization on site or before storing of soil polluted by metallic and/or metalloid oxyanions.

Europäisches
Patentamt

European
Patent Office

Office européen
des brevets

## EUROPEAN SEARCH REPORT

**Application Number**

EP 23 30 7345

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 293462 A (PENTA OCEAN CONSTRUCTION; KURITA WATER IND LTD) 23 October 2001 (2001-10-23) * paragraphs [0001], [0015] - [0020]; example 2 * | 1-6,10 | INV. B09C1/08 C04B14/30 B09B3/27 C09K17/10 C04B28/04 |
| X | CN 102 764 759 B (HUNAN YONGQING ENVIRONMENT REMEDIATION CO LTD) 13 November 2013 (2013-11-13) * claim 1; examples * | 7-9 | C04B22/12 C04B24/04 C04B18/04 |
| X | CN 102 295 933 B (UNIV ZHEJIANG) 5 June 2013 (2013-06-05) * claim 1 * | 7 | ADD. B09B101/90 C04B103/00 C04B111/00 |
| A | WO 00/05004 A1 (MURAKASHI LIME IND [JP]; FUJI SOGYO CO LTD [JP] ET AL.) 3 February 2000 (2000-02-03) * examples * | 1-10 | |

**TECHNICAL FIELDS SEARCHED (IPC)**

B09C
C04B
B09B
F16D
C09K

The present search report has been drawn up for all claims

| Place of search | Date of completion of the search | Examiner |
|---|---|---|
| Munich | 7 June 2024 | Tassinari, Francesca |

EPO FORM 1503 03.82 (P04C01)

## ANNEX TO THE EUROPEAN SEARCH REPORT
## ON EUROPEAN PATENT APPLICATION NO.

EP 23 30 7345

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | | Publication date | Patent family member(s) | | Publication date |
|---|---|---|---|---|---|
| JP 2001293462 | A | 23-10-2001 | NONE | | |
| CN 102764759 | B | 13-11-2013 | NONE | | |
| CN 102295933 | B | 05-06-2013 | NONE | | |
| WO 0005004 | A1 | 03-02-2000 | AU | 3629699 A | 14-02-2000 |
| | | | JP | 3969617 B2 | 05-09-2007 |
| | | | JP | 2000093927 A | 04-04-2000 |
| | | | WO | 0005004 A1 | 03-02-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 6047-25-2
- *CHEMICAL ABSTRACTS*, 13478-10-9
- *CHEMICAL ABSTRACTS*, 7705-08-0
- *CHEMICAL ABSTRACTS*, 7782-61-8